# EUROPÄISCHE PATENTSCHRIFT

(11) **EP 0 444 304 B1**
(45) Veröffentlichungstag und Bekanntmachung des Hinweises auf die Patenterteilung: **27.07.1994**
(21) Anmeldenummer: 90125255.1
(22) Anmeldetag: 21.12.1990
(51) Int. Cl.: F16L 37/14, F16L 33/20

(54) **Automatisch montierbare Steckkupplung für Leitungsschläuche in Kraftfahrzeugen**
Automatic mountable plug-coupling for hose pipes in motor vehicles
Montage automatique d'un accouplement enfichable pour tuyaux flexibles dans des véhicules automobiles

(30) Priorität: 28.02.1990 DE 4006200
(43) Veröffentlichungstag der Anmeldung: 04.09.1991
(73) Patentinhaber: Continental Aktiengesellschaft, 30165 Hannover (DE)
(72) Erfinder: Brettschneider, Ulrich, Dr., W 3360 Osterrode-Marke (DE); Keuper, Dieter, Dr., W-3355 Kalefeld 5 (DE); Haberjahn, Horst, W-3030 Walsrode (DE)
(74) Vertreter: Schneider, Egon

(56) Entgegenhaltungen:
- EP-A- 327 441
- EP-A- 0 392 234
- DE-A- 3 243 811

## Beschreibung

Die Erfindung betrifft eine automatisch montierbare Steckkupplung für Leitungsschläuche in Kraftfahrzeugen gemäß dem Oberbegriff des Patentanspruchs 1.

Steckkupplungen dieser Art sind beispielsweise in dem Dokument EP-A- 327 441 beschrieben. Sie haben durchweg den Nachteil, daß die als Riegelelement verwendete U-förmige Klammer ein separates Bauteil darstellt, das getrennt hergestellt und zusätzlich montiert werden muß. Es stellte sich daher die Aufgabe, eine automatisch montierbare Steckkupplung aufzuzeigen, die sich durch kostensparende, unkomplizierte, problemlose Herstellbarkeit, vereinfachte Lagerhaltung und leichte - auch manuelle - Montage auszeichnet.

Diese Aufgabe wird erfindungsgemäß durch eine Steckkupplung der eingangs genannten Gattung gelöst, die gemäß dem kennzeichnenden Teil des Patentanspruchs 1 ausgebildet ist. In den Unteransprüchen sind vorteilhafte Varianten und Weiterbildungen der Erfindung gekennzeichnet.

Demnach ist das Riegelelement - die besagte U-förmige Klammer - ein bei der Herstellung des Rohrstutzens mit diesem einstückig zusammen geformtes Kunststoffteil, das durch eine eine Sollbruchstelle aufweisende Verbindung in einer seiner Einschuböffnung am Mantel des Rohrstutzens unmittelbar benachbarten Lage gehalten ist. Bei einer erfindungsgemäßen Steckkupplung, die ein in dieser Weise angeordnetes - sozusagen vormontiertes - Riegelelement aufweist, wird zur Fixierung des in den Rohrstutzen eingesteckten Schlauchnippels lediglich ein kurzer radialer Schlag gegen das exakt positionierte Riegelelement ausgeführt, durch den dieses an der Sollbruchstelle seiner Verbindung von der Rohrstutzenwandung gelöst und radial in seine Riegelstellung verschoben wird.

Die Montage eines Schlauches - beispielsweise eines Kühlwasserschlauches im Motorraum eines Kraftfahrzeuges - wird also durch die vorliegende Erfindung auf zwei kurze translatorische Bewegungen - einstecken und verriegeln - reduziert, die auch bei beengten Raumverhältnissen und schlechter Zugänglichkeit des Montageortes mit geringem Kraftaufwand durchgeführt werden können. Damit wird nicht nur die manuelle Montage erleichtert, sondern es werden auch die Voraussetzungen für den Einsatz automatischer Montagevorrichtungen verbessert.

Zweckmäßigerweise ist der die Abdichtung der erfindungsgemäßen Steckkupplung gewährleistende Dichtring - vorzugsweise ein O-Ring - unverlierbar in einer in die Schlauchnippelwandung eingeformten, seine axiale Verschiebbarkeit begrenzenden, umlaufenden Nut angeordnet. Ferner ist es vorteilhaft, die erfindungsgemäße Steckkupplung zur Verbesserung ihrer Axialsteifigkeit, also zur Aufnahme von radial oder winklig am Schlauch angreifenden Kräften, mit einem am Schlauchnippel im Bereich des freien Endes des Rohrstutzens angeordneten Stützkragen zu versehen, dessen Außendurchmesser knapp unter dem Innendurchmesser der ihm gegenüberliegenden Wandung des Rohrstutzens liegt. Dieser Stützkragen kann nach Art eines umlaufenden Ringes ausgebildet sein; vorzugsweise ist er jedoch in mehrere, äquidistant über den Umfang des Rohrstutzens verteilt angeordnete Segmente unterteilt.

In weiterer vorteilhafter Ausgestaltung der vorliegenden Erfindung weist der Schlauchnippel zur Begrenzung des Aufschubbereiches des Schlauches mindestens ein nasenartiges radial an seiner Außenwand angeformtes Anschlagelement auf, das sich zur Vermeidung einer störenden Stauchung des Schlauchendes über höchstens 10 Winkelgrade in Umfangsrichtung erstreckt und dessen radiale Höhe mindestens der halben Wandstärke des Schlauches entspricht. In der vorstehend beschriebenen Ausführung des Stützkragens in Form mehrerer äquidistant angeordneter Segmente können diese gleichzeitig die Funktion der die Aufschublänge des Schlauches begrenzenden Anschlagelemente übernehmen.

Im allgemeinen ist bei der Steckkupplung gemäß der vorliegenden Erfindung der Schlauchnippel mit dem fest mit diesem verbundenen Schlauch in dem Rohrstutzen frei verdrehbar. Für Anwendungsfälle, in denen eine solche Verdrehbarkeit unerwünscht oder aus irgendwelchen Gründen nachteilig ist, kann die erfindungsgemäße Steckkupplung mit einer Drehsicherung ausgestattet sein, und zwar vorzugsweise in Form eines den kreisrunden Querschnitt des Schlauchnippels nasenartig radial überragenden Vorsprungs, der in der Soll-Winkelstellung des Schlauchnippels zum Rohrstutzen in eine in die Rohrstutzen-Innenwandung eingeformte axiale Führungsnut radial eingreift und in dieser axial verschiebbar ist.

In weiterer Ausgestaltung der Erfindung wird vorgeschlagen, das freie Ende des Rohrstutzens so radial aufzuweiten und axial zu verlängern, daß es den Endbereich des Schlauches und insbesondere die Stirnfläche der Schlauchwandung schützend überdeckt.

Eine besonders vorteilhafte Anwendung finden die erfindungsgemäßen Schlauchkupplungen bei der Erstellung von Schlauchverzweigungen,wie z.B. T-Stücken oder dergleichen, die bisher nur als komplette vorgefertigte Einheiten verfügbar waren oder vor Ort aus entsprechenden Rohrverzweigungen und daran mittels Schlauchschellen befestigten Schläuchen zusammengestellt werden mußten.
In Ausgestaltung der vorliegenden Erfindung wird nun vorgeschlagen, eine erfindungsgemäße Steckkupplung so zu ergänzen, daß ihr Rohrstutzen in eine Rohrverzweigung - also z.B. ein Rohr-T-Stück od. dgl. - mündet, deren weitere Ausgänge mindestens teilweise ebenfalls als Steckkupplungen gemäß der vorliegenden Erfindung ausgebildet sind, so daß insgesamt variabel zusammensteckbare Schlauchverzweigungen entstehen, die sich durch leichte Handhabbarkeit und universelle Einsatzmöglichkeiten auszeichnen. Besonders vorteilhaft ist hierbei, daß an derartigen erfindungsgemäßen Schlauchverzweigungen auch zwei oder mehr Steckkupplungen der erfindungsgemäßen Art parallel zueinander, unmittelbar nebeneinander angeordnet sein können, ohne daß eine gegenseitige Behinderung bei der Montage oder Demontage auftritt. Hierbei ist lediglich zu beachten - was konstruktiv in aller Regel problemlos möglich ist - daß die Riegelelemente der nebeneinanderliegenden Steckkupplungen parallel zueinander in die ihnen zugeordneten Öffnungen der Rohrstutzenwandungen einschiebbar sind.

Zur weiteren Erläuterung der vorliegenden Erfindung ist diese in der beigefügten Zeichnung in verschiedenen Darstellungen und Ausführungsbeispielen wiedergegeben.

Es zeigen
- Fig. 1:: einen Längsschnitt durch eine erfindungsgemäße Steckkupplung (Schnitt I-I in Fig. 3)
- Fig. 2:: einen Längsschnitt durch dieselbe Steckkupplung in einer zu der Darstellung gemäß Fig. 1 um 90° um die Längsachse gedrehten Ebene (Schnitt II-II in Fig. 3)
- Fig. 3:: einen Querschnitt durch eine solche Schlauchkupplung (Schnitt III-III in Fig. 1)
- Fig. 4:: einen Fig. 1 entsprechenden Längsschnitt durch eine vorteilhaft abgewandelte Steckkupplung
- Fig. 5:: einen Fig. 3 entsprechenden Querschnitt durch eine Steckkupplung mit angeformtem Riegelelement
- Fig. 6:: eine mittels einer T-förmigen Rohrverzweigung zu einem Schlauch-T-Stück ergänzte Steckkupplung.

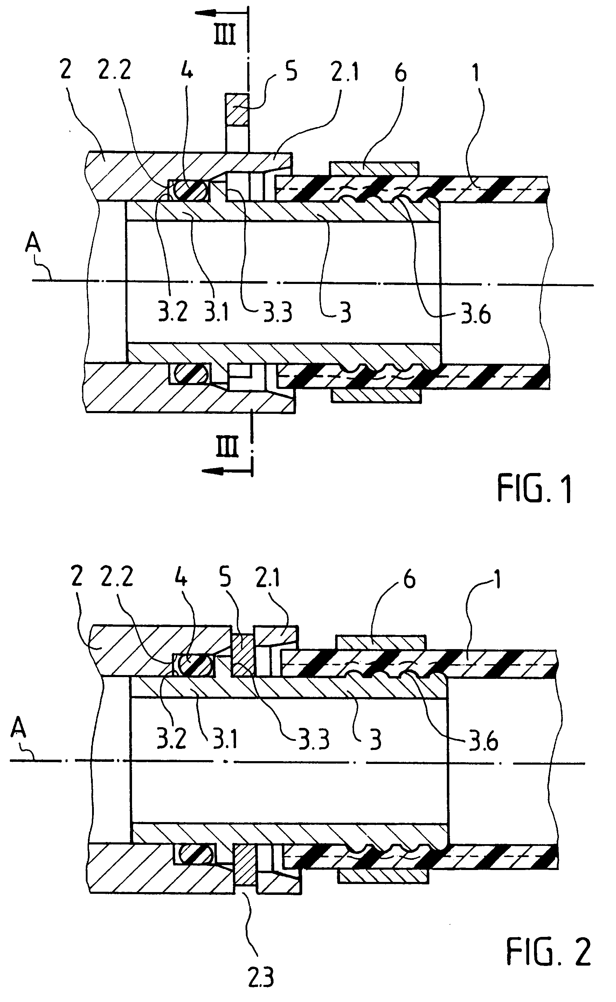

Die in den Figuren 1-3 dargestellte erfindungsgemäße Steckkupplung weist einen Rohrstutzen 2 auf, mit dem ein Schlauch 1 über einen an ihm befestigten Rohrnippel 3 dichtend verbunden ist. Ein zwischen der Wandungsaußenfläche 3.2 des Schlauchnippels 3 und der Wandungsinnenfläche 2.2 des Rohrstutzens 2 unter radialer Kompression eingesetzter Dichtring 4 - vorzugsweise ein O-Ring - sorgt für eine sichere Abdichtung zwischen dem Rohrstutzen und dem Schlauchnippel. Zwischen dem Dichtring 4 und dem auf dem Schlauchnippel 3 aufgeschobenen Schlauchende ist an den Schlauchnippel 3 ein Anschlagflansch angeformt, dessen dem freien Ende 3.1 des Schlauchnippels abgewandte Flanke 3.3 radial verläuft und als Anschlagfläche für das quer zur Kupplungslängsachse A in die schlitzförmigen Wandungsöffnungen 2.3 des Rohrstutzens 2 eingeschobene Riegelelement 5 dient. Hierdurch ist der Schlauchnippel 3 mit dem an ihm befestigten Schlauch 1 sicher am Rohrstutzen 2 fixiert. Andererseits kann er jederzeit durch einfaches Herausziehen des Riegelelementes 5 wieder vom Rohrstutzen 2 gelöst werden.

Zur sicheren dichtenden Fixierung des Schlauches 1 am Schlauchnippel 3 dient ein Spannring 6 - vorzugweise ein geschlossener Metallring gemäß DE-GM 88 11 459 - der die Schlauchwandung radial gegen die mit umlaufenden Halterippen 3.6 versehene Nippelwandung preßt.

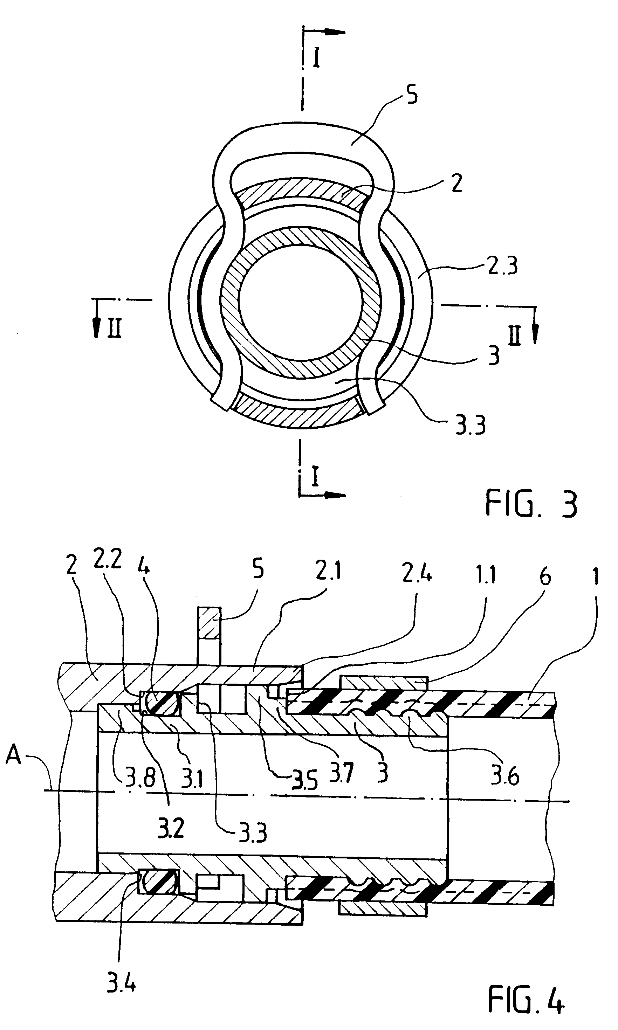

Fig. 4 verdeutlicht an einem abgewandelten Ausführungsbeispiel der erfindungsgemäßen Steckkupplung eine Reihe weiterer vorteilhafter Konstruktionsmerkmale. Der Dichtring 4 ist in einer in die Schlauchnippelwandung eingeformten, seine axiale Verschiebbarkeit begrendzenden umlaufenden Nut 3.4 angeordnet, wodurch er vor der Montage der Steckkupplung und gegebenenenfalls auch bei einer eventuellen Demontage unverlierbar auf dem Schlauchnippel 4 gehaltert ist . Ferner weist die dargestellte Steckkupplung eine Drehsicherung 3.8 auf, die in Form eines den kreisrunden Querschnitt des Schlauchnippels 3 nasenartig radial überragenden Vorsprungs in der Soll-Winkelstellung des Schlauchnippels 3 zum Rohrstutzen 2 in eine in die Rohrstutzen-Innenwandung eingeformte axiale Führungsnut radial eingreift und in dieser axial verschiebbar ist.

Zur Erhöhung der axialen Steifigkeit der erfindungsgemäßen Steckkupplung ist es vorteilhaft, den Schlauchnippel 3 im Bereich des freien Endes 2.1 des Rohrstutzens 2 mit einem Stützkragen 3.5 zu versehen, der als umlaufender Ring oder in Form mehrerer äquidistant über den Umfang verteilter Segmente an den Schlauchnippel 3 angeformt ist und dessen Außendurchmesser knapp unter dem Innendurchmesser der ihm gegenüberliegenden Wandung des Rohrstutzens 2 liegt. Ferner sind axiale Anschlagelemente 3.7 vorgesehen, gegen die das Stirnende 1.1 des Schlauches 1 beim Aufschieben auf den Schlauchnippel stößt, wodurch der Aufschubbereich eindeutig begrenzt und definiert ist. Die Anschlagelemente 3.7 sind als nasenartige, radial an die Außenwand des Schlauchnippels angeformte Vorsprünge ausgebildet, die sich in Umfangsrichtung über höchstens 10 Winkelgrade und in radialer Richtung mindestens bis zur halben Wandstärke des Schlauches erstrecken. Durch die genannte Begrenzung der Erstreckung der Anschlagelemente in Umfangsrichtung werden Staucheffekte vermieden, die in störender Weise im Bereich des Stirnendes 1.1 des Schlauches zu einer Vergrößerung des Schlauchaußendurchmessers führen können. Eine solche Verdickung des Schlauchstirnendes könnte z.B. das Einstecken des Schlauchnippels 3 in den Rohrstutzen 2 behindern, und zwar insbesondere dann, wenn das freie Ende 2.1 des Rohrstutzens 2 zum Schutz des Schlauchendes 1.1 mit einer radial aufgeweiteten, das Schlauchende überdeckenden axialen Verlängerung ausgestattet ist.

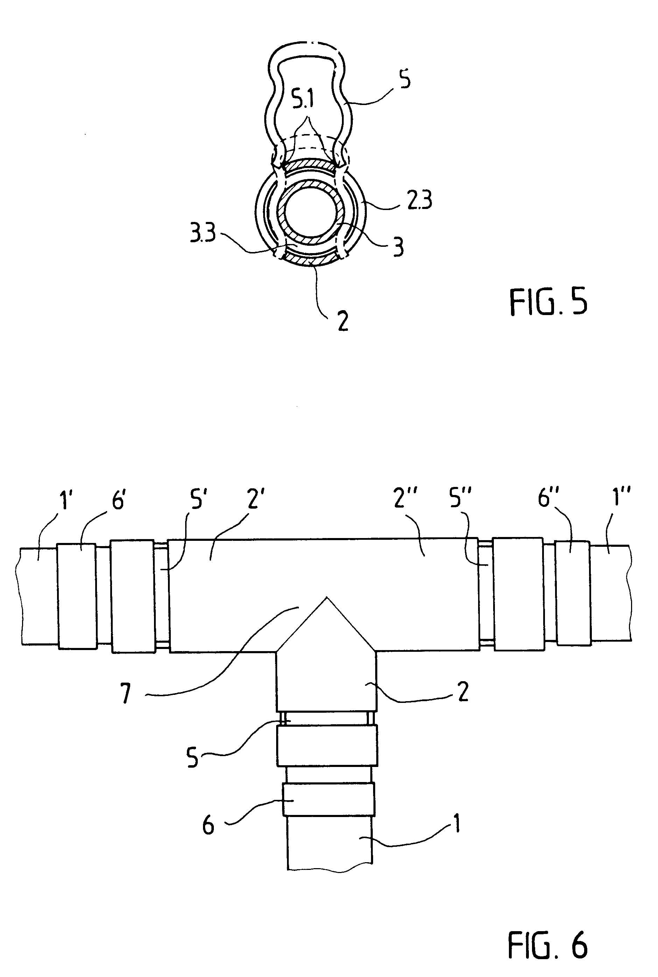

In der besonders zweckmäßigen Ausgestaltung des Erfindungsgedankens gemäß Fig. 5 ist das Riegelelement 5 ein einstückig mit dem Rohrstutzen 2 geformtes Kunststoffteil, das über mit Sollbruchstellen versehene Verbindungen 5.1 am Rohrstutzenmantel in einer Lage gehalten ist, die den Einschuböffnungen 2.3 unmittelbar benachbart ist. Durch einen radialen Schlag gegen sein Scheitelende kann dies Riegelement 5 an seinen Sollbruchstellen 2.3 gelöst und in seine gestrichelt gezeichnete Verriegelungslage geschoben werden.

In Fig. 6 ist eine besonders vorteilhafte Anwendungsform der vorliegenden Erfindung dargestellt. Der Rohrstutzen 2, an dem ein Schlauchnippel mit daran mittels Spannring 6 befestigtem Schlauch 1 angekuppelt und durch ein Riegelelement 5 fixiert ist, mündet in ein Rohr-T-Stück 7, dessen andere Ausgänge 2' und 2'' ebenfalls als Steckkupplungs-Rohrstutzen gemäß der vorliegenden Erfindung ausgebildet sind, an denen jeweils ein weiterer Schlauch 1' und 1'' entsprechend angekuppelt ist.

## Patentansprüche

1. Automatisch montierbare Steckkupplung zum lösbaren Anschließen von Leitungsschläuchen in Kraftfahrzeugen mit einem Rohrstutzen (2) und einem dichtend fest mit dem Schlauch (1) verbundenen und mit seinem freien Ende (3.1) in den Rohrstutzen (2) einsteckbaren und ohne jegliche Drehbewegung dichtend an diesem fixierbaren Schlauchnippel (3), wobei das freie Ende (3.1) des Schlauchnippels (3) an seiner Wandungsaußenfläche (3.2) einen Dichtring (4) trägt, der beim Einführen des Schlauchnippels (3) in dem Rohrstutzen (2) den Ringspalt zwischen dessen Wandungsinnenfläche (2.2) und der Wandungsaußenfläche (3.2) des Schlauchnippels (3) unter radialer Kompression radial ausfüllt und abdichtet, und wobei der Rohrstutzen (2) zwei seine Wandung durchdringende Öffnungen in Form von einander gegenüberliegenden parallelen Schlitzen (2.3) aufweist, deren radiale Tiefe bis auf die Wandungsfläche (3.2) des Schlauchnippels (3) reicht und ein Riegelelement in Form einer U-förmigen biegeelastischen Klammer (5) vorgesehen ist, deren Schenkel unter elastischer Aufweitung ihres Abstandes formschlüssig in die Schlitze (2.3) einsteckbar sind und sich in diesen einerseits gegen die Schlitzflanken und andererseits gegen eine am Schlauchnippel (3) angebrachte, dessen freiem Ende (3.1) abgewandte radiale Flanke (3.3) axial abstützen, dadurch gekennzeichnet, daß das Riegelelement (5) ein einstückig mit dem Rohrstutzen (2) geformtes Kunststoffteil ist, das durch mindestens eine eine Sollbruchstelle aufweisende Verbindung (5.1) in einer der Öffnung (2.3) unmittelbar benachbarten Lage gehalten ist.

2. Steckkupplung nach Anspruch 1, dadurch gekennzeichnet, daß der Dichtring (4) in einer in die Schlauchnippelwandung eingeformten, seine axiale Verschiebbarkeit begrenzenden umlaufenden Nut (3.4) angeordnet ist.

3. Steckkupplung nach einem der Ansprüche 1 oder 2, dadurch gekennzeichnet, daß der Schlauchnippel (3) im Bereich des freien Endes (2.1) des Rohrstutzens (2) einen umlaufenden oder aus mehreren über den Umfang des Rohrstutzens gleichmäßig verteilt angeordneten Segmenten gebildeten Stützkragen (3.5) aufweist, dessen Außendurchmesser knapp unter dem Innendurchmesser der ihm gegenüberliegenden Wandung des Rohrstutzens (2) liegt.

4. Steckkupplung nach einem der Ansprüche 1 bis 3, dadurch gekennzeichnet, daß der Aufschubbereich des Schlauches (1) auf dem Schlauchnippel (3) in axialer Richtung durch mindestens ein nasenartiges, radial an die Außenwand des Schlauchnippels (3) angeformtes Anschlagelement (3.7) begrenzt ist, das sich in Umfangsrichtung über höchstens 10 Winkelgrade und in radialer Richtung mindestens bis zur halben Wandstärke des Schlauches ersteckt.

5. Steckkupplung nach einem der Ansprüche 1 bis 4, gekennzeichnet durch eine Drehsicherung (3.8) in Form eines den kreisrunden Querschnitt des Schlauchnippels (3) nasenartig radial überragenden Vorsprungs, der in der Soll-Winkelstellung des Schlauchnippels (3) zum Rohrstutzen (2) in eine in die Rohrstutzen-Innenwandung eingeformte axiale Führungsnut radial eingreift und in dieser axial verschiebbar ist.

6. Steckkupplung nach einem der Ansprüche 1 bis 5, dadurch gekennzeichnet, daß das freie Ende (2.1) des Rohrstutzens (2) eine radial aufgeweitete, das Schlauchende (1.1) überdeckende axiale Verlängerung (2.4) aufweist.

7. Steckkupplung nach einem der Ansprüche 1 bis 6, dadurch gekennzeichnet, daß der Rohrstutzen (2) in einer Rohrverzweigung (7) - wie ein Rohr-T-Stück oder dergleichen - mündet, von deren weiteren Ausgängen mindestens einer als Steckkupplung gemäß einem der Ansprüche 1 bis 6 ausgebildet ist.

## Claims

1. Automatically mountable plug coupling for the detachable connection of hose pipes in motor vehicles, having a connection pipe (2) and a hose nipple (3), which is sealingly and securedly connected to the hose (1), is insertable into the connection pipe (2) with its free end (3.1) and is sealingly securable on said connection pipe without any rotational movement, the free end (3.1) of the hose nipple (3) being provided, on its external wall surface (3.2), with a sealing ring (4) which radially fills and seals the annular gap between the internal wall surface (2.2) of the connection pipe (2) and the external wall surface (3.2) of the hose nipple (3) when the hose nipple (3) is introduced into said connection pipe due to radial compression, and the connection pipe (2) having two apertures, which penetrate its wall and are in the form of parallel slots (2.3) situated opposite each other, the radial depth of said slots extending to the wall surface (3.2) of the hose nipple (3), and a locking element being provided in the form of a U-shaped, resilient clamp (5), the arms of which are insertable into the slots (2.3) in a form-fitting manner due to a resilient enlargement of the spacing therebetween and are axially supported in said slots, on the one hand, against the slot walls and, on the other hand, against a radial wall (3.3), which is mounted on the hose nipple (3) and situated remote from its free end (3.1), characterised in that the locking element (5) is a plastics material component part, which is integrally formed with the connection pipe (2) and retained in a position immediately adjacent the aperture (2.3) by means of at least one connection (5.1), which has a selected breaking point.

2. Plug coupling according to claim 1, characterised in that the sealing ring (4) is disposed in a circumferential groove (3.4), which is moulded in the wall of the hose nipple and defines its axial displaceability.

3. Plug coupling according to one of claims 1 or 2, characterised in that the hose nipple (3) has, in the region of the free end (2.1) of the connection pipe (2), a supporting collar (3.5) which is circumferential or is formed from a plurality of segments uniformly distributed over the circumference of the connection pipe, the external diameter of said collar being just smaller than the internal diameter of the wall of the connection pipe (2) situated opposite said collar.

4. Plug coupling according to one of claims 1 to 3, characterised in that the region of the hose (1) which is slipped over the hose nipple (3) is defined in the axial direction by at least one nose-like stop member (3.7), which is formed to fit radially on the external wall of the hose nipple (3) and extends for a maximum of 10 angular degrees in the circumferential direction and to at least half the wall thickness of the hose in the radial direction.

5. Plug coupling according to one of claims 1 to 4, characterised by a rotation-preventing means (3.8) in the form of a projection member, which protrudes radially in a nose-like manner beyond the circular cross-section of the hose nipple (3), said projection member engaging radially in an axial guide groove, which is moulded in the internal wall of the connection pipe, when the hose nipple (3) is in its desired angular position relative to the connection pipe (2), and said projection member is axially displaceable in said groove.

6. Plug coupling according to one of claims 1 to 5, characterised in that the free end (2.1) of the connection pipe (2) has a radially enlarged axial extension member (2.4), which covers the hose end (1.1).

7. Plug coupling according to one of claims 1 to 6, characterised in that the connection pipe (2) terminates in a branched pipe portion (7) - such as a T-shaped pipe portion or the like - at least one of the additional outlets thereof being formed as a plug coupling in accordance with one of claims 1 to 6.

## Revendications

1. Accouplement enfichable à monter automatiquement pour le raccordement amovible de tuyauteries flexibles de véhicule automobile comportant une tubulure (2) et un nipple de tuyau (3) reliés de manière fixe et étanche avec le tuyau (1) et à enficher avec son extrémité libre (3.1) dans la tubulure (2) et à fixer sur celle-ci de manière étanche sans aucun mouvement de rotation, l'extrémité libre (3.1) du nipple (3) portant sur sa surface extérieure de paroi (3.2) une bague d'étanchéité (4) qui, lors de l'introduction du nipple (3) dans la tubulure (2), remplit radialement et rend étanche la fente annulaire entre sa surface intérieure de paroi (2.2) et la surface extérieure de paroi (3.2) du nipple (3), par compression radiale, et la tubulure (2) présentant deux ouvertures traversant sa paroi, sous la forme de fentes (2.3) parallèles, opposées l'une à l'autre, dont la profondeur radiale s'étend jusqu'à la surface de paroi (3.2) du nipple (3) et un élément de verrouillage étant prévu sous la forme d'une agrafe (5) en U, élastique en flexion, dont les branches peuvent être insérées par concordance de forme dans les fentes (2.3), par élargissement élastique de leur écartement et prennent appui axialement dans celles-ci, d'une part contre les flancs des fentes et d'autre part contre un flanc (3.3) radial placé sur le nipple (3), tourné à l'opposé de son extrémité libre (3.1), caractérisé en ce que l'élément de verrouillage (5) est un élément en matière plastique formé d'une seule pièce avec la tubulure (2), qui est maintenu dans une position directement voisine de l'ouverture (2.3), par au moins une liaison (5.1) présentant un point de rupture.

2. Accouplement enfichable selon la revendication 1, caractérisé en ce que la bague d'étanchéité (4) est prevue dans une rainure (3.4) continue formée dans la paroi du nipple au tuyau, délimitant son déplacement axial.

3. Accouplement enfichable selon l'une des revendications 1 ou 2, caractérisé en ce que le nipple (3) présente dans la zone de l'extrémité libre (2.1) de la tubulure (2), un collet d'appui (3.5) continu ou formé de plusieurs segments uniformément répartis sur la périphérie de la tubulure, collet dont le diamètre extérieur se situe juste au-dessous du diamètre intérieur de la paroi lui faisant face de la tubulure (2).

4. Accouplement enfichable selon l'une des revendications 1 à 3, caractérisé en ce que la zone d'emboîtement du tuyau (1) sur le nipple (3) est limitée dans la direction axiale par au moins un élément de butée (3.7) en forme d'ergot, formé radialement sur la paroi extérieure du nipple (3), lequel élément de butée s'étend périphériquement sur au plus 10 degrés d'angle et radialement au moins jusqu'à la moitié de l'épaisseur de la paroi du tuyau.

5. Accouplement enfichable selon l'une des revendications 1 à 4, caractérisé par un blocage en rotation (3.8) sous la forme d'une saillie dépassant radialement à la manière d'un ergot de la section transversale circulaire du nipple (3), laquelle saillie, dans la position angulaire de consigne du nipple (3) par rapport à la tubulure (2), s'engage radialement dans une rainure de guidage axiale formée dans la paroi intérieure de la tubulure et peut coulisser axialement dans celle-ci.

6. Accouplement enfichable selon l'une des revendications 1 à 5, caractérisé en ce que l'extrémité libre (2.1) de la tubulure (2) présente un prolongement axial, élargi radialement, recouvrant l'extrémité (1.1) du tuyau.

7. Accouplement enfichable selon l'une des revendications 1 à 6, caractérisé en ce que la tubulure (2) débouche dans un embranchement de tube (7) - tel qu'un tube en T ou similaire - l'une au moins des autres sorties étant configurée comme accouplement enfichable selon l'une des revendications 1 à 6.
